# EUROPEAN PATENT SPECIFICATION

(11) **EP 3 514 101 B1**
(45) Date of publication and mention of the grant of the patent: **17.03.2021**
(21) Application number: 19152992.4
(22) Date of filing: 22.01.2019
(51) Int. Cl.: B66C 23/90, B60P 1/54, B66C 23/70, B66C 13/40

(54) **CRANE**
KRAN
GRUE

(30) Priority: 23.01.2018 IT 201800001688
(43) Date of publication of application: 24.07.2019
(73) Proprietor: EFFER S.p.A., 40061 Minerbio (BO) (IT)
(72) Inventor: CHIFFI, Giampaolo, 40052 BARICELLA (BOLOGNA) (IT); IRENZE, Attilio, 40137 BOLOGNA (IT)
(74) Representative: Casadei, Barbara

(56) References cited:
- WO-A1-2017/135382
- US-A- 4 211 332
- US-A1- 2017 036 894
- US-B1- 6 170 681

## Description

This invention relates to a crane for moving loads.

The crane is, in particular, mounted on a respective movable transport vehicle, preferably in the form of a vehicle movable on the road, in particular the vehicle being in the form of a truck which has a respective box for supporting the load in which is positioned the crane.

There are prior art cranes for moving loads which are mounted on a corresponding truck which has a respective box for supporting the load in which is positioned the crane.

The prior art cranes comprise an arm for supporting the load which is telescopically movable in a plurality of positions of extension included between a retracted position and a position of maximum extension and which comprises a plurality of sliding members, and have the respective supporting arm which is rotatable angularly, in particular horizontally, relative to a respective axis of rotation of the crane and can therefore be positioned in different angular positions of rotation.

The prior art cranes also comprise means which are designed to stabilise the crane to avoid the risk of overturning during the working operations of the arm, the stabilising means being configurable in a plurality of stabilising configurations of the crane.

One problem seen in relation to these prior art cranes regards the fact that the user, whilst operating the crane, it is not able to know with certainty whether the operation is being performed in a dangerous condition or not.

In fact, the manufacturers of these cranes usually provide the users with information regarding the maximum load which can be lifted by the crane, in the condition of maximum stability.

For example, a crane of known type is described and illustred in document US2017/036894.

Sometimes, however, it is necessary to operate in ambient conditions in which the condition of maximum stability is not achievable and in these cases the personnel cannot know whether the operation is being carried out safely or not.

The need is therefor felt in the sector to provide a crane which allows the users to operate in a safe fashion.

However, the need is felt in the sector to provide a crane which is particularly reliable.

Moreover, the need is felt in the sector to provide a crane which allows users to operate in a particularly fast manner.

The need is also felt in the sector to provide a crane which is easy to use.

In addition, the need is felt in the sector to provide a crane which allows the user to foresee which manoeuvres can be performed safely.

Some cranes are described in patent documents WO2017/135382, US4211332, US6170681.

The present invention therefore proposes a new and/or alternative solution to the solutions known up to now and, more specifically, proposes to overcome one or more of the above mentioned drawbacks or problems and/or to meet one or more of the needs felt in the trade or inferable from the above.

A crane is therefore provided for moving loads, in particular mounted on a respective movable transport vehicle, preferably in the form of a vehicle movable on the road, in particular the vehicle being in the form of a truck which has a respective box for supporting the load in which is positioned the crane; the crane comprising an arm for supporting the load which is telescopically movable in a plurality of positions of extension included between a retracted position and a position of maximum extension and which comprises a plurality of sliding members; the supporting arm being rotatable angularly, in particular horizontally, relative to a respective axis of rotation of the crane and it can be positioned in different angular positions of rotation; the crane also comprising means which are designed to stabilise the crane to avoid the risk of overturning during the working operations of the arm, the stabilising means being configurable in a plurality of stabilising configurations of the crane. It comprises means which are designed to indicate, in particular to the user of the crane, the maximum load which can be lifted by the crane, that is to say, by the arm of the crane, as a function of the condition of extension of the arm and/or the respective angular position of rotation of the arm.

In this way, it is possible to immediately inform the personnel regarding the operating capacity of the apparatus and it is therefore possible to operate in complete safety.

It comprises means for controlling the load movement arm of the crane; the indicator means are located at the control means of the crane; characterised in that the indicator means comprise a respective screen page, on a corresponding display unit of the crane, the screen page comprising symbols indicating the number of sliding members which are in an extended condition.

The screen page comprises a plurality of zones, in particular situated at the symbols, in particular alongside the symbols, in which is indicated, or displayed, the respective value of the maximum load in the respective condition of extension of the arm of the crane.

There are means for displaying in succession, on the display means of the crane, the values of maximum load as a function of the number of sliding members of the arm which are in the extended condition, at respective angular positions of rotation of the arm, the displaying means comprising respective key means.

The screen page comprising an area in which is indicated, or displayed, the respective angular position of rotation for which are indicated, or displayed, the values of maximum load which can be lifted.

This and other innovative aspects, or specific advantageous embodiments, are set out in the appended claims and its technical features are apparent from the detailed description which follows of a preferred, advantageous embodiment which must, however, be considered purely as a non-limiting example of the invention; the description being made with reference to the accompanying drawings, in which:
- Figure 1 is a schematic side view of a preferred embodiment of the crane;
- Figure 2 is a schematic front elevation view of a remote control which can be used in the crane;
- Figures 3 to 5 illustrate respective schematic views which show different operational situations of the embodiment of the crane according to the invention;
- Figure 6 is a flow diagram of the preferred process, implemented by a respective software, to obtain the maximum load values which can be lifted.

The accompanying drawings illustrate a preferred embodiment of a crane 10 for moving loads 13, in particular mounted on a respective movable transport vehicle, preferably in the form of a vehicle movable on the road, in particular the vehicle being in the form of a truck 11 which has a respective box for supporting the load 111 in which is positioned the crane 10.

As may be inferred from the drawings, the crane 10 comprises an arm 12 for supporting the load 13 which is telescopically movable in a plurality of positions of extension included between a retracted position and a position of maximum extension and which comprises a plurality of sliding members 121.

As may be inferred from the drawings, the supporting arm 12 is rotatable angularly, in particular horizontally, relative to a respective axis of rotation "P" of the crane 12 and it can be positioned in different angular positions of rotation, in particular situated along an angular range of extension of 360°.

As may be inferred from the drawings, the crane 10 also comprising means 14 which are designed to stabilise the crane 12 to avoid the risk of overturning during the working operations of the arm 12, the stabilising means 14 being configurable in a plurality of stabilising configurations of the crane 12, as described in more detail below.

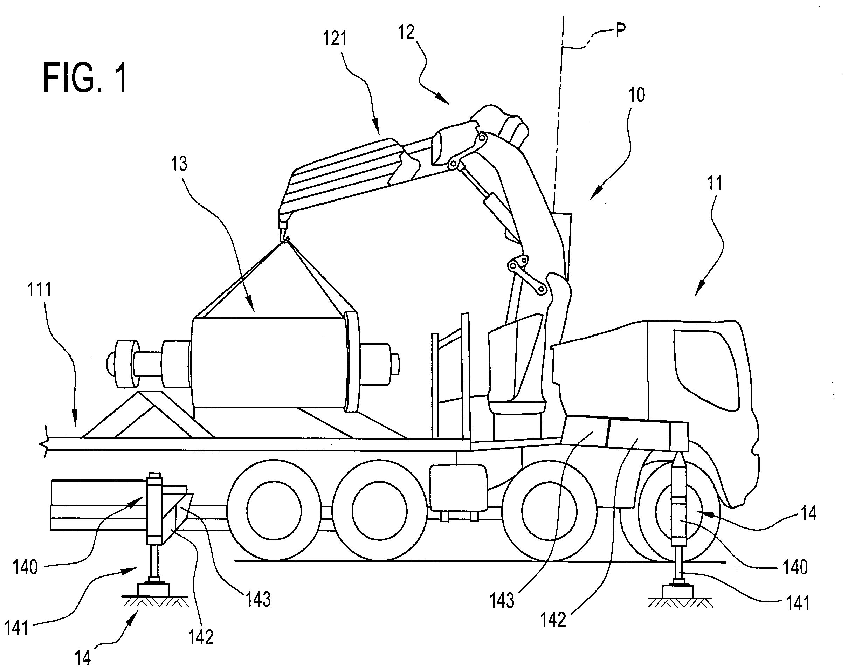

More specifically, as may be inferred from Figure 1, each sliding member 121 is movable, in particular slidable, relative to the adjacent sliding member between a respective retracted position relative to the adjacent, or upstream, sliding member 121 and a respective extended position relative to the adjacent, or upstream, sliding member 121, for respectively extending and withdrawing the arm 12.

More specifically, moreover, the arm 12 for moving the load 13 can be positioned in respective inclined positions, in particular inclined with respect to a corresponding horizontal plane, between a maximum angular or inclined position, wherein the arm 12 can reach the maximum height for moving the load 13, and a minimum angular or inclined position, wherein the arm 12 can reach the minimum height for moving the load 13.

More specifically, as may be inferred from the drawings, the means 14 which are designed to stabilise the crane 12 to avoid the risk of overturning during the working operations of the arm 12 comprise one or more elements, or feet, for resting on the ground, 141, in particular in this embodiment there are four feet 141 resting on the ground which are each supported by the end of the rod of a respective jack preferably vertical 140 which can each be respectively positioned in a plurality of stabilising positions of the crane 12, between a respective position close to the crane 12, or to the vehicle 11 supporting the crane 12), and a position furthest away from the crane 12, or the vehicle 11 for supporting the crane 12.

In effect, as illustrated, the elements, or feet, for resting on the ground, 141, which are supported at the end of the rod of respective vertical jacks 140, are supported by respective sliding members 142 which are movable, in particular transversely or horizontally, between a position retracted in a corresponding housing 143 fixed to the vehicle 11, and a maximum extension position wherein the sliding members 142 are outside the housing, in particular tubular, 143.

As illustrated, the means 14 which are designed to stabilise the crane 12 are fixed, or extend, from the frame of the vehicle for supporting the crane, in particular laterally to the latter.

In the crane 10 there are means 18 which are designed to indicate, in particular to the user of the crane 10, the maximum load which can be lifted by the crane, that is to say, by the arm of the crane 10, as a function of the condition of extension of the arm 12 and/or the respective angular position of rotation of the arm 12.

In this way, it is possible to immediately inform the personnel regarding the operating capacity of the apparatus and it is therefore possible to operate in complete safety.

As may be inferred in particular from the drawing, the means 18 for indicating the maximum load which can be lifted by the crane, that is to say, by the arm of the crane, are in the form of means which display the maximum load which can be lifted.

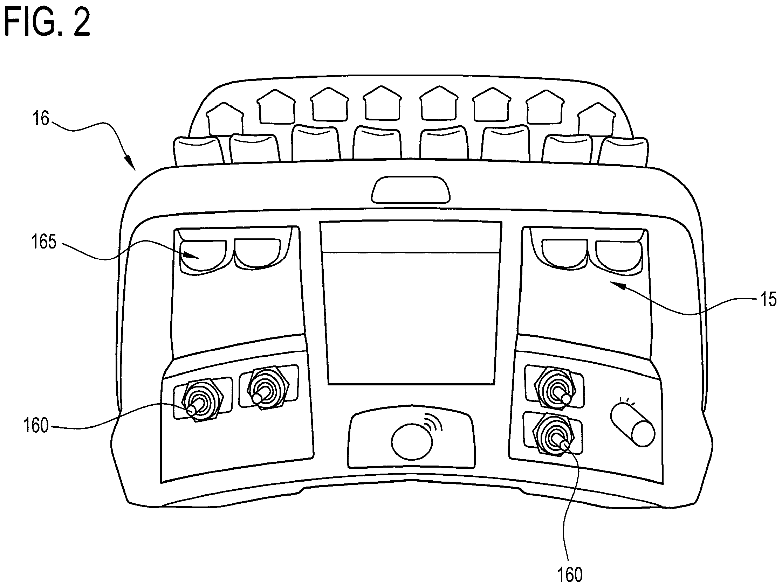

As may be inferred in particular from Figure 2, there are means 16 for controlling the crane 12, in particular the arm 12 for moving the load of the crane 10.

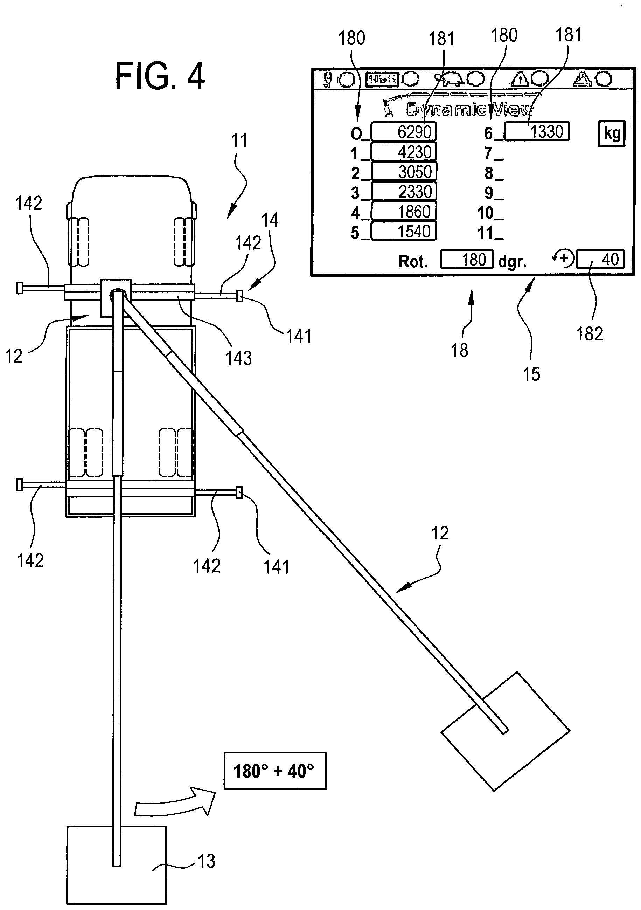

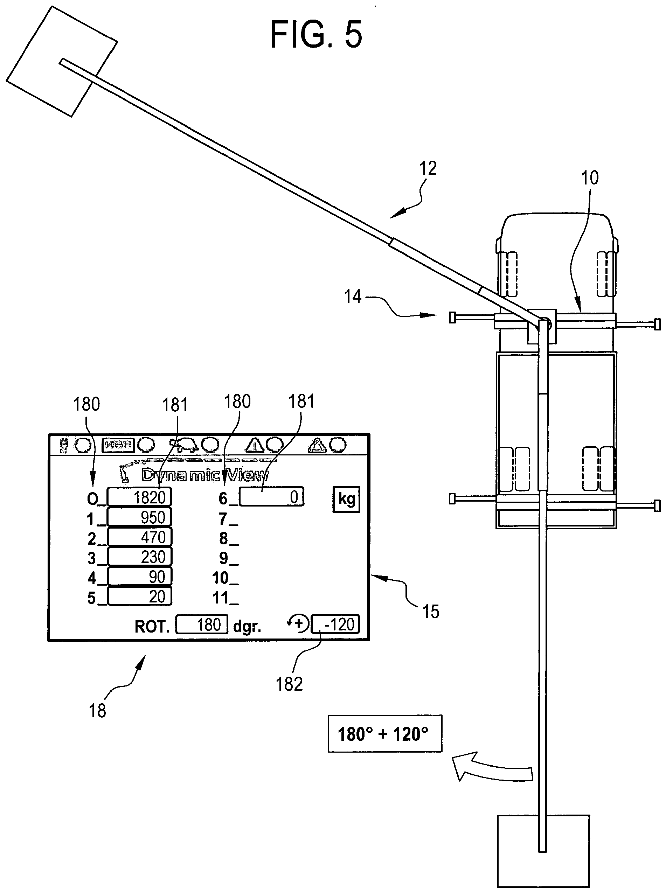

As may be inferred from Figures 2 to 5, the indicator means 18 are provided at the means 16 for controlling the crane 12, in particular for controlling the load movement arm 12 of the crane 10.

More specifically, as may be inferred from Figure 2, the control means of the crane 10, or of the arm 12, comprise a display unit 15 and respective manual control means, in particular in the form of pushbuttons and/or respective control levers 160, which can be suitably operated by the user.

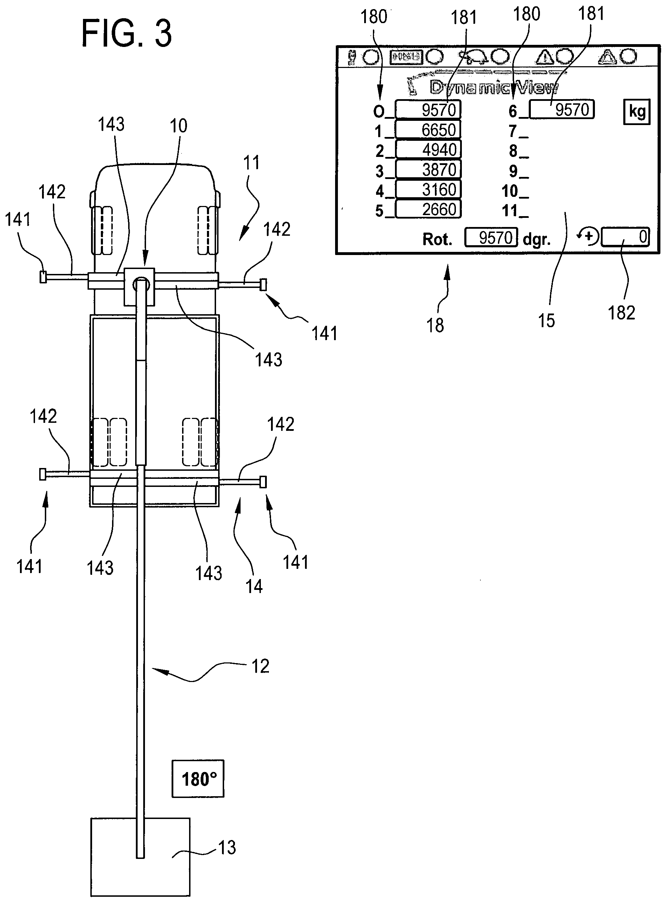

Advantageously, as may be inferred from Figures 3 to 5, the display unit 15 of the means 16 for controlling the crane 12, in particular for controlling the load movement arm 12 of the crane 10, is designed to define the means 18 for indicating the maximum load which can be lifted.

Advantageously, as may be inferred from Figure 2, the means 16 for controlling the crane 12, in particular the load movement arm 12 of the crane 10, are in the form of a remote control device, in particular portable, having a respective display unit 15.

Advantageously, as may be inferred from Figures 3 to 5, the means 18 which are designed to indicate to the user the maximum load which can be lifted by the crane 10, that is to say, by the arm 12 of the crane 10, indicate, in particular progressively, for the respective angular position of rotation 182, the maximum load which can be lifted as a function of the number of sliding members 121 of the arm 12 which are in the extended condition.

In this way, the user can immediately understand the current working condition and can understand the corresponding operating decisions.

As may be inferred from Figures 3 to 5, the means 18 which are designed to indicate to the user the load which can be lifted by the crane 10, that is to say, the load which can be lifted by the arm 12 of the crane 10, provide, or comprise, a respective screen page, on a corresponding display unit 15 of the crane 12, the screen page comprising symbols 180 indicating the number of sliding members 121 which are in the extended condition or not; the symbols being in particular, as illustrated in Figures 3 to 5, in the form of a sequence of natural numbers between the number zero and the number of the sliding members 121 of the respective arm 12 of the crane 10.

As may be inferred from Figures 3 to 5, the means 18 which are designed to indicate to the user the load which can be lifted by the crane 10, that is to say, the load which can be lifted by the arm (12) of the crane 10, provide a respective screen page, on a corresponding display unit 15 of the crane 12, the screen page comprising a plurality of zones 181, in particular situated at the symbols, in particular alongside the symbols 180, in which is indicated, or displayed, the respective value, for example, as illustrated, expressed in kilograms, of the maximum load which can be lifted by the crane 10, or by the arm 12 of the crane 10, in the corresponding working condition, that is, in the respective condition of extension of the arm 12 of the crane 10.

As may be inferred from Figures 3 to 5, the means 18 which are designed to indicate to the user the load which can be lifted by the crane 10, that is to say, the load which can be lifted by the arm 12 of the crane 10, provide a respective screen page, on a corresponding display unit 15 of the crane 12, the screen page comprising an area 182 in which is indicated, or displayed, the respective angular position of rotation for which are indicated, or displayed, the values of maximum load which can be lifted 181.

Advantageously, there are electronic processing means, not illustrated in detail in the accompanying drawings, implementing a corresponding process, through a respective program or software, which are designed to determine or calculate the maximum load which can be lifted by the crane 12, that is to say, by the arm 12 of the crane 10, as a function of the condition of extension of the arm 12 and/or the respective angular position of rotation of the arm 12.

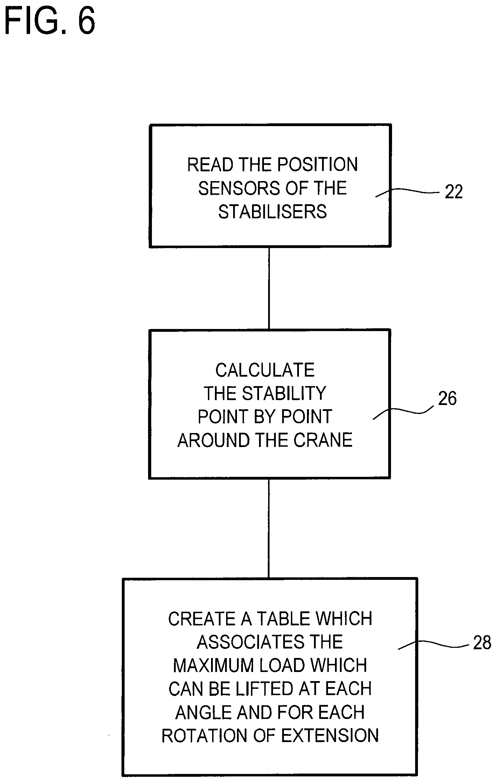

Advantageously, as may be inferred in particular from Figure 6 which illustrates a flow diagram of the process implemented by the crane, the means for determining, or calculating, the maximum load which can be lifted by the crane 12, that is to say, by the arm 12 of the crane 10, as a function of the condition of extension of the arm 12 and/or the respective angular position of rotation of the arm 12, comprise respective means 22 which measure the specific configuration of the stabilising means 14 of the crane 12, in the respective working condition, in particular the configuration being defined by the respective condition or the extension position of the sliding members 142 for supporting the means 141 for resting on the ground of the stabilising means 14.

Advantageously, the means 22 designed to measure the configuration of the stabilising means 14 comprise sensor means, which are not illustrated in detail in the accompanying drawings, which are designed to measure the length of extension of the sliding members 142 which carry the respective means 14 for resting on the ground.

Advantageously, as may be inferred in particular from Figure 6, the means designed to indicate to the user the load which can be lifted by the crane 10, that is to say, by the arm 12 of the crane 10, comprise respective means 26, in particular including, or in the form of corresponding, software means or program instructions, which are designed to calculate the limit of stability point by point around the crane 10, in particular as a function of the configuration of the stabilising means 14 of the crane 12.

Advantageously, as may be inferred in particular from Figure 6, the means designed to indicate to the user the load which can be lifted by the crane 10, that is to say, by the arm 12 of the crane 10, comprise respective means 28, in particular including, or in the form of corresponding, software means, which are designed to create a table which, for each angular position of rotation, associates with the respective number of sliding members 121 in the extended condition the relative maximum load value which can be lifted, in particular as a function of the configuration of the stabilising means 14 of the crane 12.

Preferably, the means which are designed to indicate to the user the load which can be lifted by the crane 10, that is to say, by the arm 12 of the crane 10, comprise respective means, in particular including or in the form of corresponding software means, which are designed to display, on the display unit 15, in particular of the crane, that is, in the respective area 181 of this, for the respective angular position of the arm indicated in the respective area 182, the value of maximum load which can be lifted that can be associated to the respective number of sliding members 121 in the extended condition, with the values of maximum load which can be lifted which are taken from the table created in the step 28.

Advantageously, as may be inferred from Figures 3 to 5, the means for displaying in succession, on the display means 15 of the crane 10, the values of maximum load which can be lifted by the crane 10, in particular as a function of the number of sliding members 121 of the arm 12 which are in the extended condition, at respective angular positions of rotation 182 of the arm 12, the displaying means comprising respective key means 165, in particular in the form of key means of the remote control unit 16, in particular which increase, for example by 10° degrees each time, the respective screens which display the respective values of maximum load which can be lifted by the crane 10.

In this way, by progressively displaying the various screens which illustrate the maximum loads which can be lifted by the crane, in particular in the various positions of extension of the arm, along a respective angular range, if necessary along the entire angular arc of 360° around the crane, the user can immediately understand which actions may be undertaken to lift the load in a suitable manner.

More specifically, as illustrated, there are means for activating the respective sliding member 121 of the arm 12 of the crane 10 relative to the adjacent sliding member between a respective retracted position relative to the latter and a respective extended position relative to the adjacent sliding member, in particular in the form of corresponding hydraulic drive means, in particular in the form of respective hydraulic jacks.

More specifically, as illustrated, although not illustrated in detail in the accompanying drawings, there are drive means for rotating the telescopic arm 12 relative to the axis of rotation P perpendicular to the crane 12.

More specifically, as illustrated, although not illustrated in detail in the accompanying drawings, there are drive means for inclining the telescopic arm 12 in respective inclined positions, in particular in the form of corresponding hydraulic drive means.

More specifically, as illustrated, although not illustrated in detail in the accompanying drawings, there are drive means for the sliding members 142 which carry the stabilising means for resting on the ground 141, in particular in the form of corresponding hydraulic drive means, preferably in the form of respective hydraulic jacks.

In practice, as is evident, the technical features described above allow the present invention, individually or in respective combination, to achieve one or more of the following advantageous results:
- it is possible to immediately inform the personnel regarding the operating capacity of the apparatus and it is therefore possible to operate in complete safety.
- the user can immediately understand the current working condition;
- a crane can be provided which is particularly reliable;
- a crane can be provided which makes it possible to operate in a particularly fast manner;
- a crane can be provided which is easy to use;
- a crane can be provided which allows the user to foresee which manoeuvres are to be performed.

The invention described above is susceptible of industrial application. It would be obvious to one skilled in the art that several changes and modifications can be made to the invention without departing from the scope of the invention, which is defined solely by the appended claims.

## Claims

1. A crane (10) for moving loads (13), comprising an arm (12) for supporting the load (13) which is telescopically movable in a plurality of positions of extension included between a retracted position and a position of maximum extension and a plurality of sliding members (121); the supporting arm (12) being rotatable angularly, in particular horizontally, relative to a respective axis of rotation (P) of the crane (12) and it can be positioned in different angular positions of rotation;
the crane (10) also comprising
means (14) which are designed to stabilise the crane (12) to avoid the risk of overturning during the working operations of the arm (12), the stabilising means (14) being configurable in a plurality of stabilising configurations of the crane (12);
indicator means (18) which are designed to indicate, in particular to the user of the crane (10), the maximum load which can be lifted by the arm (12) of the crane (10), as a function of the condition of extension of the arm (12) and/or the respective angular position of rotation of the arm (12); means (16) for controlling the load movement arm (12) of the crane (10);
- the indicator means (18) are located at the control means (16) of the crane (12);
**characterised in that**
- the indicator means (18) comprise a respective screen page, on a corresponding display unit (15) of the crane (12), the screen page comprising symbols (180) indicating the number of sliding members (121) which are in an extended condition;
- the screen page comprises a plurality of zones (181), in particular situated at the symbols, in particular alongside the symbols (180), in which is indicated, or displayed, the respective value of the maximum load in the respective condition of extension of the arm (12) of the crane (10);
- there are means for displaying in succession, on the display means (15) of the crane (10), the values of maximum load as a function of the number of sliding members (121) of the arm (12) which are in the extended condition, at respective angular positions of rotation (182) of the arm (12), the displaying means comprising respective key means (165);
- the screen page comprising an area (182) in which is indicated, or displayed, the respective angular position of rotation for which are indicated, or displayed, the values of maximum load which can be lifted (181).

2. The crane according to claim 1, wherein the means (18) for indicting the maximum load which can be lifted are in the form of means which display the maximum load which can be lifted.

3. The crane according to any one of the preceding claims, wherein the control means of the crane (10) comprise a display unit (15) designed to define the indicator means (18) and comprise respective manual control means, in particular in the form of pushbuttons and/or respective control levers (160), which can be suitably operated by the user.

4. The crane according to claim 3, wherein the control means (16) are in the form of a remote control device, in particular portable, having the display unit (15).

5. The crane according to any one of the preceding claims, wherein the indicator means indicate, in particular progressively, for the respective angular position of rotation (182), the maximum load which can be lifted as a function of the number of sliding members (121) of the arm (12) which are in the extended condition.

6. The crane according to any one of the preceding claims, wherein there are electronic processing means, implementing a corresponding program or software, which are designed to determine or calculate the maximum load as a function of the condition of extension of the arm (12) and/or the respective angular position of rotation of the arm (12).

7. The crane according to claim 6, wherein the means which are designed to determine, or calculate, the maximum load comprise respective means (22) which measure the specific configuration of the stabilising means (14) of the crane (12), in the respective working condition, in particular the configuration being defined by the respective condition or the extension position of the sliding members (142) for supporting the means (141) for resting on the ground of the stabilising means (14).

8. The crane according to claim 7, wherein the means (22) designed to measure the configuration of the stabilising means (14) comprise sensor means which are designed to measure the length of extension of the sliding members (142) which carry the respective means (14) for resting on the ground.

9. The crane according to any one of the preceding claims, wherein:
- the indicator means comprise respective software means or program instructions, which are designed to calculate the limit of stability point by point around the crane (10), as a function of the configuration of the means (14) for stabilising the crane (12);
- the software means are designed to create a table which, for each angular position of rotation of the arm, associates with the respective number of sliding members (121) in the extended condition the relative maximum load value which can be lifted, in particular as a function of the configuration of the stabilising means (14) of the crane (12);
- the stabilising means (14) comprise one or more elements, or feet, for resting on the ground, (141), which can each be respectively positioned in a plurality of stabilising positions of the crane (12), between a respective position close to the crane (12), or to the vehicle (11) supporting the crane (12), and a position furthest away from the crane (12), or the vehicle (11) for supporting the crane (12).

10. The crane according to any one of the preceding claims, wherein the arm (12) for moving the load (13) can be positioned in respective inclined positions between a maximum angular or inclined position, wherein the arm (12) can reach the maximum height for moving the load (13), and a minimum angular or inclined position, wherein the arm (12) can reach the minimum height for moving the load (13).

11. The crane according to any one of the preceding claims, wherein each sliding member (121) is movable, in particular slidable, relative to the adjacent sliding member between a respective retracted position relative to the adjacent sliding member (121) and a respective extended position relative to the adjacent sliding member (121), for respectively extending and withdrawing the arm (12).

12. The crane according to any one of the preceding claims, wherein there are means for activating the respective sliding member (121) of the arm (12) of the crane (10) relative to the adjacent sliding member between a respective retracted position relative to the latter and a respective extended position relative to the same adjacent sliding member, in the form of respective hydraulic jacks.

13. The crane according to any one of the preceding claims, wherein there are drive means for rotating the telescopic arm (12) relative to the axis of rotation (P) perpendicular to the crane (12).

14. The crane according to any one of the preceding claims, wherein there are drive means for inclining the telescopic arm (12) in respective inclined positions, in the form of corresponding hydraulic drive means.

15. The crane according to any one of the preceding claims, wherein there are drive means for the sliding members (142) which carry the stabilising means for resting on the ground (141), in the form of respective hydraulic jacks.

## Patentansprüche

1. Kran (10) zum Bewegen von Lasten (13), umfassend einen Ausleger (12) zum Stützen der Last (13), der teleskopisch in eine Vielzahl von Ausfahrpositionen bewegbar ist, die zwischen einer eingefahrenen Position und einer Position des maximalen Ausfahrens eingeschlossen sind, und eine Vielzahl von Schiebeelementen (121), wobei der Stützausleger (12) winkelig, insbesondere horizontal relativ zu einer jeweiligen Rotationsachse (P) des Krans (12) drehbar ist und in verschiedenen Rotationswinkelpositionen positioniert werden kann, wobei der Kran (10) auch Folgendes umfasst:
Mittel (14), die ausgestaltet sind, um den Kran (12) zu stabilisieren, um das Risiko des Umkippens während der Arbeitsvorgänge des Auslegers (12) zu vermeiden, wobei die Stabilisierungsmittel (14) in einer Vielzahl von Stabilisierungskonfigurationen des Krans (12) konfigurierbar sind;
Anzeigemittel (18), die ausgestaltet sind, um insbesondere dem Nutzer des Krans (10) die maximale Last, die vom Ausleger (12) des Krans (10) gehoben werden kann, als eine Funktion des Ausfahrzustands des Auslegers (12) und/oder der jeweiligen Rotationswinkelposition des Auslegers (12) anzuzeigen;
Mittel (16) zur Steuerung des Lastbewegungsauslegers (12) des Krans (10),
- wobei die Anzeigemittel (18) an den Steuerungsmitteln (16) des Krans (12) angeordnet sind,
**dadurch gekennzeichnet, dass**
- die Anzeigemittel (18) eine jeweilige Bildschirmseite auf einer entsprechenden Displayeinheit (15) des Krans (12) umfassen, wobei die Bildschirmseite Symbole (180) umfasst, die die Zahl von Schiebeelementen (121) anzeigen, die sich in einem ausgefahrenen Zustand befinden;
- die Bildschirmseite eine Vielzahl von Zonen (181) umfasst, die insbesondere an den Symbolen angeordnet sind, insbesondere entlang der Symbole (180), in denen der jeweilige Wert der maximalen Last im jeweiligen Ausfahrzustand des Auslegers (12) des Krans (10) angegeben oder angezeigt ist;
- Mittel bereitgestellt sind, um auf den Displaymitteln (15) des Krans (10) nacheinander die Werte maximaler Last als eine Funktion der Zahl von Schiebeelementen (121) des Auslegers (12), die sich in ausgefahrenem Zustand befinden, an jeweiligen Rotationswinkelpositionen (182) des Auslegers (12) anzuzeigen, wobei die Displaymittel jeweilige Schlüsselmittel (165) umfassen;
- die Bildschirmseite einen Bereich (182) umfasst, in dem die jeweilige Rotationswinkelposition angegeben ist, für die die Werte maximaler Last, die gehoben werden kann (181) angegeben oder angezeigt sind.

2. Kran nach Anspruch 1, wobei die Mittel (18) zum Anzeigen der maximalen Last, die gehoben werden kann, in Form von Mitteln sind, die die maximale Last, die gehoben werden kann, anzeigen.

3. Kran nach einem der vorhergehenden Ansprüche, wobei die Steuerungsmittel des Krans (10) eine Displayeinheit (15) umfassen, die ausgestaltet ist, um die Anzeigemittel (18) zu definieren, und die jeweilige manuelle Bedienmittel umfasst, insbesondere in Form von Drucktasten und/oder jeweiligen Bedienhebeln (160), die vom Nutzer auf geeignete Weise betätigt werden können.

4. Kran nach Anspruch 3, wobei die Steuerungsmittel (16) die Form einer Fernsteuerungsvorrichtung, die insbesondere tragbar ist, aufweisend die Displayeinheit (15) .

5. Kran nach einem der vorhergehenden Ansprüche, wobei die Anzeigemittel insbesondere stufenweise für die jeweilige Rotationswinkelposition (182) die maximale Last, die gehoben werden kann, als eine Funktion der Zahl von Schiebeelementen (121) des Auslegers (12) anzeigen, die sich im ausgefahrenen Zustand befinden.

6. Kran nach einem der vorhergehenden Ansprüche, wobei elektronische Verarbeitungsmittel bereitgestellt sind, die ein entsprechende Programm oder eine Software implementieren, die ausgestaltet sind, um die maximale Last als eine Funktion des Ausfahrzustands des Auslegers (12) und/oder der jeweiligen Rotationswinkelposition des Auslegers (12) zu bestimmen oder zu berechnen.

7. Kran nach Anspruch 6, wobei die Mittel, die ausgestaltet sind, um die maximale Last zu bestimmen oder zu berechnen, jeweilige Mittel (22) umfassen, die die spezifische Konfiguration der Stabilisierungsmittel (14) des Krans (12) im jeweiligen Betriebszustand messen, wobei die Konfiguration insbesondere durch den jeweiligen Zustand oder die Ausfahrposition der Schiebeelemente (142) zum Stützen der Mittel (141) für die Auflage auf dem Boden der Stabilisierungsmittel (14) definiert ist.

8. Kran nach Anspruch 7, wobei die Mittel (22), die ausgestaltet sind, um die Konfiguration der Stabilisierungsmittel (14) zu messen, Sensormittel umfassen, die ausgestaltet sind, um die Ausfahrlänge der Schiebeelemente (142) zu messen, die die jeweiligen Mittel (14) für die Auflage auf dem Boden tragen.

9. Kran nach einem der vorhergehenden Ansprüche, wobei
- die Anzeigemittel jeweilige Softwaremittel oder Programmanweisungen umfassen, die ausgestaltet sind, um die Stabilitätsgrenze rund um den Kran (10) Punkt um Punkt als eine Funktion der Konfiguration der Mittel (14) zum Stabilisieren des Krans (12) zu berechnen;
- die Softwaremittel ausgestaltet sind, um eine Tabelle zu erstellen, die für eine jede Rotationswinkelposition des Auslegers mit der jeweiligen Zahl von Schiebeelementen (121) im ausgefahrenen Zustand den jeweiligen maximalen Wert der Last, die gehoben werden kann, insbesondere als eine Funktion der Konfiguration der Stabilisierungsmittel (14) des Krans (12) assoziiert;
- die Stabilisierungsmittel (14) ein oder mehrere Elemente oder Füße für die Auflage auf dem Boden (141) umfassen, die jeweils in einer Vielzahl von Stabilisierungspositionen des Krans (12) zwischen einer jeweiligen Position, die sich nah am Kran (12) oder dem Fahrzeug (11), das den Kran (12) stützt, befindet, und einer Position, die am weitesten vom Kran (12) oder dem Fahrzeug (11), das den Kran (12) stützt, entfernt ist, positioniert werden können.

10. Kran nach einem der vorhergehenden Ansprüche, wobei der Ausleger (12) zum Bewegen der Last (13) in jeweiligen geneigten Positionen zwischen einer maximalen Winkel- oder geneigten Position, in der der Ausleger (12) die maximale Höhe zum Bewegen der Last (13) erreichen kann, und einer Mindestwinkelposition oder geneigten Mindestposition, in der der Ausleger (12) die Mindesthöhe zum Bewegen der Last (13) erreichen kann, positioniert werden kann.

11. Kran nach einem der vorhergehenden Ansprüche, wobei ein jedes Schiebeelement (121) relativ zum angrenzenden Schiebeelement zwischen einer jeweiligen eingefahrenen Position relativ zum angrenzenden Schiebeelement (121) und einer jeweiligen ausgefahrenen Position relativ zum angrenzenden Schiebeelement (121) bewegbar, insbesondere verschiebbar ist, um den Ausleger (12) jeweils auszufahren und zurückzuziehen.

12. Kran nach einem der vorhergehenden Ansprüche, wobei Mittel bereitgestellt sind, um das jeweilige Schiebeelement (121) des Auslegers (12) des Krans (10) relativ zum angrenzenden Schiebeelement zwischen einer jeweiligen eingefahrenen Position relativ zu diesem und einer jeweiligen ausgefahrenen Position relativ zum selben angrenzenden Schiebeelement zu aktivieren, die die Form von jeweiligen Hydraulikhebern aufweisen.

13. Kran nach einem der vorhergehenden Ansprüche, wobei Antriebsmittel bereitgestellt sind, um den Teleskopausleger (12) relativ zur Rotationsachse (P) senkrecht zum Kran (12) zu drehen.

14. Kran nach einem der vorhergehenden Ansprüche, wobei Antriebsmittel bereitgestellt sind, um den Teleskopausleger (12) in jeweilige geneigte Position zu neigen, die die Form von entsprechenden hydraulischen Antriebsmitteln aufweisen.

15. Kran nach einem der vorhergehenden Ansprüche, wobei Antriebsmittel für die Schiebeelemente (142) bereitgestellt sind, die die Stabilisierungsmittel für die Auflage auf dem Boden (141) tragen, die die Form von jeweiligen Hydraulikhebern aufweisen.

## Revendications

1. Grue (10) servant à déplacer des charges (13), comprenant un bras (12), servant à supporter la charge (13), étant mobile de manière télescopique dans une pluralité de positions d'extension incluses entre une position rétractée et une position d'extension maximale et une pluralité d'éléments coulissants (121) ; le bras de support (12) pouvant tourner angulairement, en particulier horizontalement, par rapport à un axe de rotation (P) respectif de la grue (12) et pouvant être positionné dans différentes positions angulaires de rotation ;
la grue (10) comprenant également
des moyens (14) étant conçus pour stabiliser la grue (12) afin d'éviter le risque de renversement pendant les opérations de travail du bras (12), les moyens de stabilisation (14) pouvant être configurés dans une pluralité de configurations de stabilisation de la grue (12) ;
des moyens indicateurs (18) étant conçus pour indiquer, en particulier à l'utilisateur de la grue (10), la charge maximale pouvant être soulevée par le bras (12) de la grue (10), en fonction de la condition d'extension du bras (12) et/ou de la position angulaire de rotation respective du bras (12) ;
des moyens (16) servant à commander le bras de déplacement (12) de charge de la grue (10) ;
- les moyens indicateurs (18) sont situés en correspondance des moyens de commande (16) de la grue (12) ;
**caractérisée en ce que**
- les moyens indicateurs (18) comprennent une page d'écran respective, sur une unité d'affichage (15) correspondante, indiquant le nombre d'éléments coulissants (121) étant dans une condition étendue ;
- la page d'écran comprend une pluralité de zones (181), situées en particulier en correspondance de symboles, en particulier à côté des symboles (180), dans lesquelles est indiquée, ou affichée, la valeur respective de la charge maximale dans la condition respective d'extension du bras (12) de la grue (10) ;
- des moyens sont prévus pour afficher en succession, sur les moyens d'affichage (15) de la grue (10), les valeurs de la charge maximale en fonction du nombre d'éléments coulissants (121) du bras (12) se trouvant dans la condition étendue, en correspondance de positions angulaires de rotation respectives (182) du bras (12), les moyens d'affichage comprenant des moyens de clé (165) respectifs ;
- la page d'écran comprenant une zone (182) dans laquelle est indiquée, ou affichée, la position angulaire de rotation respective pour laquelle sont indiquées, ou affichées, les valeurs de la charge maximale qui peut être soulevée (181).

2. Grue selon la revendication 1, dans laquelle les moyens (18) servant à indiquer la charge maximale pouvant être soulevée se présentent sous la forme de moyens qui affichent la charge maximale pouvant être soulevée.

3. Grue selon l'une quelconque des revendications précédentes, dans laquelle les moyens de commande de la grue (10) comprennent une unité d'affichage (15) conçue pour définir les moyens indicateurs (18) et comprennent des moyens de commande manuelle respectifs, en particulier sous la forme de boutons poussoirs et/ou de leviers de commande respectifs (160), qui peuvent être actionnés de manière appropriée par l'utilisateur.

4. Grue selon la revendication 3, dans laquelle les moyens de commande (16) se présentent sous la forme d'un dispositif de commande à distance, en particulier portable, comportant l'unité d'affichage (15).

5. Grue selon l'une quelconque des revendications précédentes, dans laquelle les moyens indicateurs indiquent, en particulier progressivement, pour la position angulaire de rotation (182) respective, la charge maximale pouvant être soulevée en fonction du nombre d'éléments coulissants (121) du bras (12) qui se trouvent dans la condition étendue.

6. Grue selon l'une quelconque des revendications précédentes, dans laquelle il est prévu des moyens de traitement électronique, mettant en œuvre un programme ou un logiciel correspondant, qui sont conçus pour déterminer ou calculer la charge maximale en fonction de la condition d'extension du bras (12) et/ou de la position angulaire de rotation respective du bras (12).

7. Grue selon la revendication 6, dans laquelle les moyens étant conçus pour déterminer ou calculer la charge maximale comprennent des moyens respectifs (22) qui mesurent la configuration spécifique des moyens de stabilisation (14) de la grue (12), dans la condition de travail respective, en particulier la configuration étant définie par la condition respective ou la position d'extension des éléments coulissants (142) pour supporter les moyens (141) pour reposer sur le sol des moyens de stabilisation (14).

8. Grue selon la revendication 7, dans laquelle les moyens (22) conçus pour mesurer la configuration des moyens de stabilisation (14) comprennent des moyens de détection étant conçus pour mesurer la longueur d'extension des éléments coulissants (142) qui portent les moyens (14) respectifs pour reposer sur le sol.

9. Grue selon l'une quelconque des revendications précédentes, dans laquelle :
- les moyens indicateurs comprennent des moyens logiciels ou des instructions de programme respectifs étant conçus pour calculer la limite de stabilité point par point autour de la grue (10), en fonction de la configuration des moyens (14) servant à stabiliser la grue (12) ;
- les moyens logiciels sont conçus pour créer un tableau qui, pour chaque position angulaire de rotation du bras, associe au nombre respectif d'éléments coulissants (121) en condition d'extension la valeur de la charge maximale relative pouvant être soulevée, en particulier en fonction de la configuration des moyens de stabilisation (14) de la grue (12) ;
- les moyens de stabilisation (14) comprennent un ou plusieurs éléments, ou pieds, destinés à reposer sur le sol (141), qui peuvent chacun être positionnés respectivement dans une pluralité de positions de stabilisation de la grue (12), entre une position respective proche de la grue (12), ou du véhicule (11) supportant la grue (12), et une position la plus éloignée de la grue (12), ou du véhicule (11) destiné à supporter la grue (12).

10. Grue selon l'une quelconque des revendications précédentes, dans laquelle le bras (12) servant à déplacer la charge (13) peut être positionné dans des positions inclinées respectives entre une position angulaire ou inclinée maximale, dans laquelle le bras (12) peut atteindre la hauteur maximale pour déplacer la charge (13), et une position angulaire ou inclinée minimale, dans laquelle le bras (12) peut atteindre la hauteur minimale pour déplacer la charge (13).

11. Grue selon l'une quelconque des revendications précédentes, dans laquelle chaque élément coulissant (121) est mobile, en particulier coulissant, par rapport à l'élément coulissant adjacent entre une position respective rétractée par rapport à l'élément coulissant adjacent (121) et une position étendue respective par rapport à l'élément coulissant adjacent (121), pour respectivement étendre et retirer le bras (12).

12. Grue selon l'une quelconque des revendications précédentes, dans laquelle il est prévu des moyens pour activer l'élément coulissant (121) respectif du bras (12) de la grue (10) par rapport à l'élément coulissant adjacent entre une position rétractée respective par rapport à ce dernier et une position étendue respective par rapport au même élément coulissant adjacent, sous la forme de vérins hydrauliques respectifs.

13. Grue selon l'une quelconque des revendications précédentes, dans laquelle il est prévu des moyens d'entraînement servant à faire tourner le bras télescopique (12) par rapport à l'axe de rotation (P) perpendiculaire à la grue (12).

14. Grue selon l'une quelconque des revendications précédentes, dans laquelle il existe des moyens d'entraînement servant à incliner le bras télescopique (12) dans des positions inclinées respectives, sous la forme de moyens d'entraînement hydrauliques correspondants.

15. Grue selon l'une quelconque des revendications précédentes, dans laquelle il est prévu des moyens d'entraînement pour les éléments coulissants (142) qui portent les moyens de stabilisation destinés à reposer sur le sol (141), sous la forme de vérins hydrauliques respectifs.
